# EUROPEAN PATENT SPECIFICATION

(11) **EP 2 957 978 B1**
(45) Date of publication and mention of the grant of the patent: **26.09.2018**
(21) Application number: 14461542.4
(22) Date of filing: 20.06.2014
(51) Int. Cl.: G05D 1/10, B64D 5/00

(54) **Method and system for supporting maneuvers of an all-wing carrier aircraft by its parasite flying units**
Verfahren und System zur Unterstützung von Manövern von Nurflügelträgerflugzeugen durch seine Drohnenflugeinheiten
Procédé et système pour supporter des manoeuvres de déplacement d'un transporteur toute voilure par ses unités volantes parasites

(43) Date of publication of application: 23.12.2015
(73) Proprietor: Patents Factory Ltd. Sp. z o.o., 65-043 Zielona Gora (PL)
(72) Inventor: Paczkowski, Jacek, 65-043 Zielona Gora (PL); Nalewa, Tomasz, 65-043 Zielona Gora (PL); Kramek, Krzysztof, 65-043 Zielona Gora (PL)
(74) Representative: Kancelaria Eupatent.pl Sp. z.o.o

(56) References cited:
- DE-C- 723 665
- DE-U1-202011 052 293
- US-A1- 2009 294 573

## Description

### TECHNICAL FIELD

The object of the invention is a method and a system for supporting maneuvers of an all-wing carrier aircraft by its parasite flying units.

### BACKGROUND

There are known flying units of all-wing type. They usually resemble a single wing of an aircraft that comprises its own propelling means. Such flying units have several advantages, the main of which is a relatively low mass. This, in consequence, results in low fuel or energy consumption and low manufacturing costs when compared to classic flying units. The all-wing type units can be in form of UAVs (Unmanned Aerial Vehicles), which further emphasizes these advantages, and also eliminates the risk of death of the pilot.

The PCT application WO2001058756 discloses an aircraft of "all-wing" type, the flight of which can be controlled by controlling the thrust of its engines. Such steering method can allow for the lower overall mass of the aircraft, as well as less complicated construction.

There is also known a use of all-wing type units as a carrier for other, smaller UAVs with own propelling means. In such instance, these small UAVs are called 'parasites' and are connected for example to the lower surface of the carrier, so that they can be easily detached when necessary. When connected, they do not need to be propelled, as they rely on the carrier for transportation. Steering of a carrier with parasites is not different than steering of a carrier without parasites. It is however less effective and more energy consuming.

There is a need to provide a method and a system for supporting maneuvers of an all-wing carrier aircraft by its parasite flying units that would not overly compromise its low energy or fuel consumption and structural simplicity.

A US patent application US2009294573 discloses a system for reconnaissance using autonomous unmanned airborne vehicles (UAV). The system comprises a mothership, which is generally a fixed wing fuel tank capable of providing a suitable surface for flight (lift) and one or more elements for attachment of individual UAVs. The system further comprises one or more UAVs that are detachably connected to the mothership, and which are independently controllable for reconnaissance and tracking. The UAVs comprise surveillance sensors, such as television cameras and IR systems, which are not capable to cooperate with flight control surfaces of parasites to support the maneuvers of the mothership.

### SUMMARY

There is disclosed a method for supporting maneuvers of an all-wing carrier aircraft by its parasite flying units, comprising the steps of: selecting a maneuver to be performed; determining sensor values corresponding to selected maneuver; selecting flight control surfaces of parasites to support the maneuver; activating said flight control surfaces so that sensor values are matched.

Preferably, the sensor values are stress values.

Preferably, the flight control surface is an aileron.

Preferably, flight control surface is a flap.

Preferably, the flight control surface is an air-brake.

There is also disclosed a system for supporting maneuvers of an all-wing carrier aircraft by its parasite flying units, the system comprising a controller configured to: select a maneuver to be performed; determine sensor values corresponding to selected maneuver; select flight control surfaces of parasites to support the maneuver; activate said flight control surfaces so that sensor values are matched.

### BRIEF DESCRIPTION OF DRAWINGS

Further details and features of the present invention, its nature and various advantages will become more apparent from the following detailed description of the preferred embodiments shown in a drawing, in which:
Fig. 1 shows an all-wing flying unit in perspective view from above.
Fig. 2 shows an all-wing flying unit in perspective view from behind.
Figs. 3a, 3b and 4 show the carrier in the view from behind.
Fig. 5 shows the steps of a method according to the invention.
Fig. 6 shows a system according to the invention.

### DETAILED DESCRIPTION

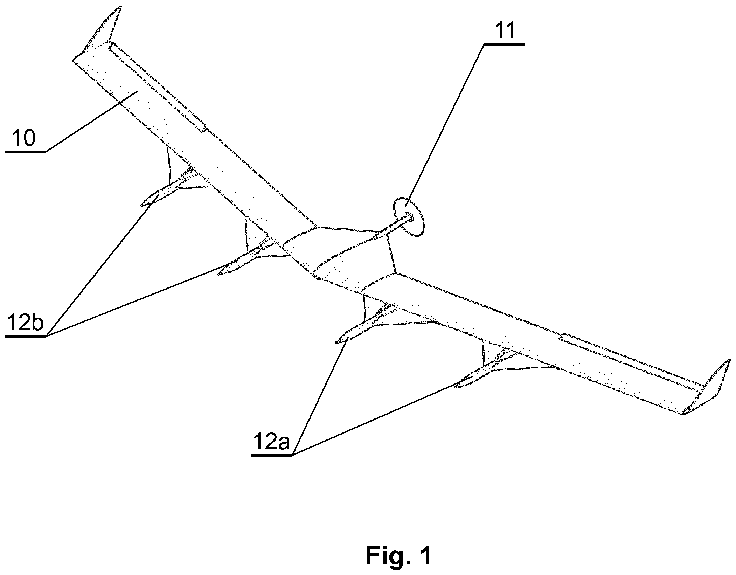

Fig. 1 shows an all-wing flying unit in perspective view from above. The flying unit, i.e. carrier 10, is propelled by a single propeller 11 located in the center. The parasites 12a, 12b (small UAVs) are connected under a wing of the carrier, substantially in a symmetric configuration with respect to its longitudinal axis. In this case, there are two parasites on the left side and two parasites on the right side of the carrier. Other configurations with different number of parasites are also possible.

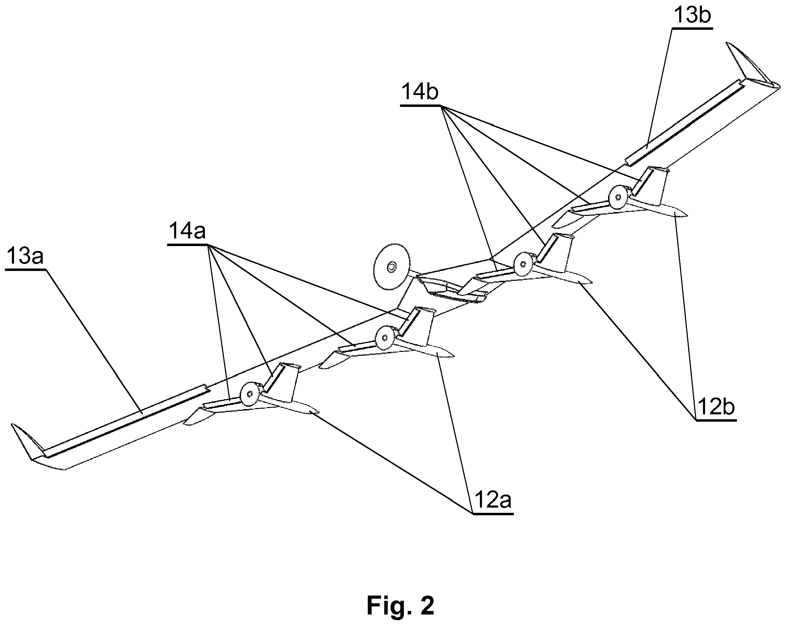

Fig. 2 shows an all-wing flying unit in perspective view from behind. The carrier 10 comprises left and right flight control surfaces 13a, 13b. Onto the left side of the carrier there are connected left parasites 12a and onto the right side there are connected right parasites 12b. The parasites 12a, 12b comprise flight control surfaces 14a, 14b, respectively.

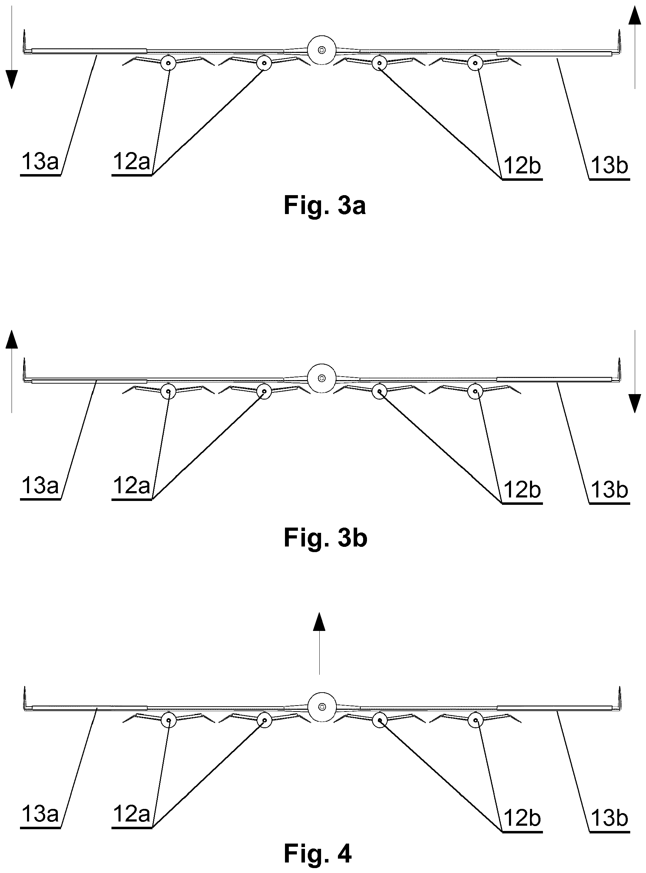

Figs. 3a, 3b and 4 show the same carrier in the view from behind. Figs. 3a, 3b present a use of parasites 12a, 12b to support a roll maneuver of the carrier. In Fig. 3a there is shown a roll maneuver to the left. Flight control surfaces 14b of parasites 12b, for example ailerons, are moved downward. This increases the overall lift on the right side of the plane and supports the flight control surface 13b of the carrier, for example also an aileron which is also moved downward, in effecting the maneuver. On the other side of the carrier, the flight control surface 13a of the carrier, also an aileron, is moved upward. In the same time the flight control surfaces 14a of parasites 12a, also ailerons, are all moved upward. This decreases the lift and further supports the maneuver.

Analogically, a roll maneuver to the right (as shown in Fig. 3b) is effected by moving downward aileron 13a and supported by moving downward ailerons of parasites 12a as well. As can be seen, all ailerons on the right side of the carrier (including ailerons of parasites) are moved upward.

It is essential that the parasites have flight control surfaces that are able to perform the same, parallel movement, i.e. a parasite can for example move both its ailerons downward or upward simultaneously.

Alternatively, during roll to the left, parasites 12b can extend their flaps so as to increase the lift produced by the right side (in addition to right flaps of the carrier). Analogically, the roll to the right is effected by extending left flap of the carrier and supported by extended flaps of parasites 12a.

In case of pitch maneuver, as shown in Fig.4, the elevator of the carrier is supported by analogical movement of elevators of the parasites (some or all of them).

Yaw maneuvers of the carrier can be supported by the parasites for example through extending their airbrakes or opening their split flaps in accordance with their corresponding carrier elements. In this way, the additional drag will support effecting of the maneuver, which will be performed more efficiently than if it would be effected by the carriers flight control surfaces alone.

The parasites are connected to the carrier through electric connections so as to allow the carrier to send control signals to the parasites. They can also be connected wirelessly. The controller 31 in the carrier can actively operate the flight control surfaces of a parasite. It can also regulate degree of extension of airbrakes or opening of split flaps (or other parameters influencing the effect posing by given flight control surface).

It is possible to use ailerons or flaps of the carrier and ailerons of parasites to function substantially as a rudder. To achieve this the ailerons of the parasites have to be able to be controlled independently (that is for example right and left aileron of single parasite). In an aircraft, typically right and left ailerons are coupled and when one is moved upward, the second is moved downward. In this case, the carrier moves one of the ailerons e.g. downward, and the other one stays in a neutral position (i.e. its angle is 0°). The parasites connected under the wing, the aileron of which has been moved (i.e. part of the wing that lies to the left from the longitudinal axis), move their ailerons in the opposite direction, namely upward so as to compensate the influence of the carrier's aileron. When the parasites compensate the aileron of the carrier, it does not roll. It turns (yaw maneuver) to the side on which its aileron has been moved, i.e. it turns left. This is because there is a bigger drag on the left side.

If it is not possible for the carrier to control the ailerons individually, then individually controllable flaps can be utilized. Such arrangement can eliminate split ailerons, which have more complicated mechanical design.

The same method can be utilized in aircraft without parasites of all-wing type or other. It is necessary to provide independent control over ailerons and flaps. If the aircraft is to turn right, the right flap should be extended (downward) and the right aileron should be moved upward. The extension of the flap should be appropriately small so that the compensation of the roll action with the aileron could be possible. The intensity of turning effect can be adjusted by regulating the degree of flap extension. The control loop should utilize roll sensors and control the movement of aileron so that the readings maintain substantially the same level (or indicate 0). Such method should be effected when the pilot uses rudder pedals (or the autopilot sends a yaw command).

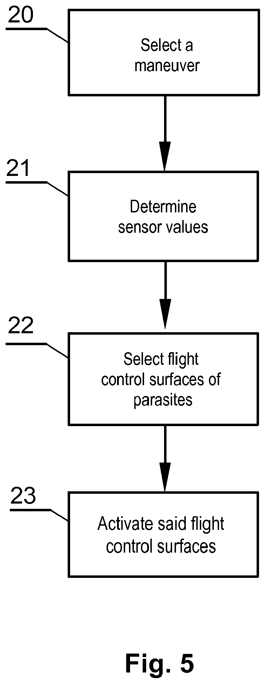

Figure 5 shows the steps of a method according to the invention. First - 20, there is selected a maneuver to be performed. It can be for example a roll maneuver. Next - 21, there are determined the sensor values 25, for example values representing the stress on the pylon of the wing, that correspond to selected maneuver. They can be measured, predicted, calculated or simulated beforehand and then stored in the memory. The step 21 of determining can, for example, be effected by retrieving these sensor values 25 from memory, where they are associated with given maneuver. Next - 22, the suitable flight control surfaces of parasites (a single, few or all of the parasites) are selected to support the maneuver of the carrier. Then - 23, said selected flight control surfaces are activated so that desired sensor values 25 are matched.

The forces (stresses) acting on selected parts of the carrier during effecting of the maneuver can be calculated, knowing the position of the flight control surfaces with respect to the center of mass of the carrier and center of pressure of said carrier. Alternatively, the forces can be measured throughout the whole aircraft (on carrier alone or together with parasites). Therefore, the control of the flight can be carried out by setting a given force to be read by measurement means, for example tensometric sensors, and adjusting the angular position and/or degree of extension of flight control surfaces so as to match this value. This can be easily done by building a control loop, wherein the controller (regulator) compares set force (stress) value with measured force (stress) value on given, selected part of the carrier and/or parasite. The output of the controller (regulator) is used to control the servomechanism in charge of a flight control surface, for example an aileron.

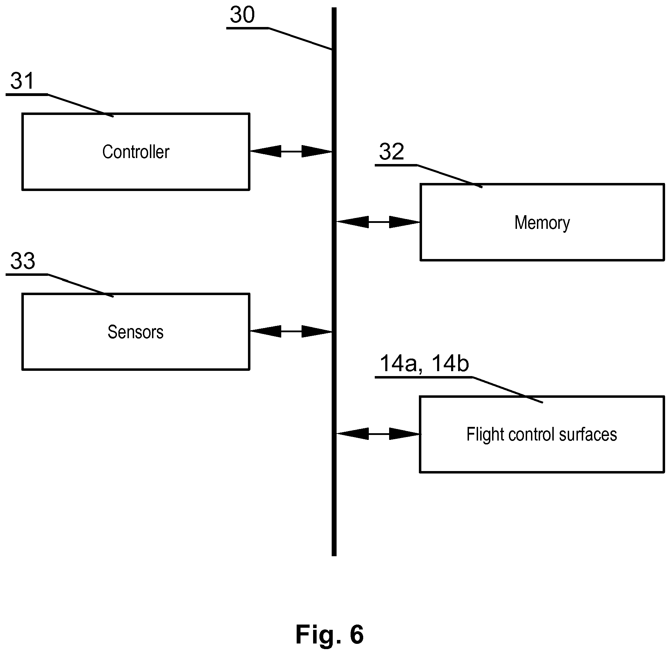

Figure 6 shows a system for supporting maneuvers of an all-wing carrier aircraft by its parasite flying units. The system comprises a controller 31. The controller 31 is configured to execute software that allows supporting maneuvers of an all-wing carrier aircraft by its parasite flying units using steps of the method described above. The system comprises a data bus 30 for communicating, preferably bi-directionally, all circuits and/or elements of the system. Further, the system comprises a memory 32 for storing required software for the controller 31 and any temporary data needed for operation of the system.

The controller 31 is communicatively connected to flight control surfaces (e.g. flaps, ailerons) of selected parasite so as to control their degree of extension or movement based on the information provided from sensors 33.

The controller 31 can use a PID regulator to control flight control surfaces 14a, 14b of selected parasite based on measurement from sensors 33. An intelligent control implementing fuzzy logic can be utilized as well.

The method according to the invention can be utilized in pilotable manned or unmanned aircraft carriers carrying pilotable manned or unmanned parasite aircrafts. At least until the deployment of the parasites, the pilot of the carrier should have full control over the parasites, as stated above.

The maneuvers could be carried out by the pilot or the system using only common means and techniques known in the art. This however would compromise the simplicity and weight of the carrier, which preferably should be as light and as simple construction-wise as possible after releasing most or all of the parasites.

The above discussion is a simplification and idealization of flying, with the assumption of preferable, moderate flight conditions.

## Claims

1. A method for supporting maneuvers of an all-wing carrier aircraft by its parasite flying units, **characterized in that** it comprises the steps of:
- providing a memory with predetermined sensor values (25) corresponding to maneuvers;
- selecting (20) a maneuver to be performed;
- determining (21) sensor values (25) corresponding to selected maneuver, by retrieving the sensor values (25) from the memory;
- selecting (22) engines of parasites to support the maneuver;
- activating (23) said engines in a control loop so that measured sensor values (25) are matched with the sensor values retrieved from the memory for the selected maneuver.

2. The method according to claim 1, wherein the sensor values (25) are stress values.

3. The method according to any of the previous claims, wherein activating (23) of engines further comprises adjusting the angular position of the parasite with respect to the carrier.

4. The method according to any of the previous claims, wherein the activating (23) of engines further comprises adjusting of the thrust of said engines.

5. A system for supporting maneuvers of an all-wing carrier aircraft by its parasite flying units, the system comprising:
- a memory with predetermined sensor values (25) corresponding to maneuvers;
- a controller (31) configured to:
- select (20) a maneuver to be performed;
- determine (21) sensor values (25) corresponding to selected maneuver by retrieving the sensor values (25) from the memory;
- select (22) engines of parasites to support the maneuver;
- activate (23) said engines in a control loop so that measured sensor values (25) are matched with the sensor values retrieved from the memory for the selected maneuver.

## Patentansprüche

1. Verfahren zur Unterstützung von Manövern von Nurflügelträgerflugzeugen durch seine Drohnenflugeinheiten, **dadurch gekennzeichnet, dass** es die folgenden Schritte umfasst:
- Bereitstellen eines Speichers mit vorgegebenen Sensorwerten (25), entsprechend den Manövern;
- Auswählen (20) eines auszuführenden Manövers;
- Bestimmen (21) von Sensorwerten (25), die dem ausgewählten Manöver entsprechen, durch Abrufen der Sensorwerte (25) aus dem Speicher;
- Auswählen (22) von Triebwerken von Drohnen zur Unterstützung des Manövers;
- Aktivieren (23) der Triebwerke in einem Regelkreis, so dass die gemessenen Sensorwerte (25) mit den für das ausgewählte Manöver aus dem Speicher abgerufenen Sensorwerten übereinstimmen.

2. Verfahren nach Anspruch 1, wobei die Sensorwerte (25) Belastungswerte sind.

3. Verfahren nach einem der vorhergehenden Ansprüche, wobei das Aktivieren (23) der Triebwerke ferner das Einstellen der Winkelposition der Drohne in Bezug auf den Träger umfasst.

4. Verfahren nach einem der vorhergehenden Ansprüche, wobei das Aktivieren (23) der Triebwerke ferner das Einstellen der Schubkraft der Triebwerke umfasst.

5. System zum Unterstützen von Manövern von Nurflügelträgerflugzeugen durch seine Drohnenflugeinheiten, wobei das System Folgendes umfasst:
- einen Speicher mit vorgegebenen Sensorwerten (25), die Manövern entsprechen;
- eine Steuerung (31), die konfiguriert ist, zum:
- Auswählen (20) eines auszuführenden Manövers;
- Bestimmen (21) von Sensorwerten (25), die dem ausgewählten Manöver entsprechen, durch Abrufen der Sensorwerte (25) aus dem Speicher;
- Auswählen (22) von Triebwerken von Drohnen zur Unterstützung des Manövers;
- Aktivieren (23) der Triebwerke in einem Regelkreis, so dass die gemessenen Sensorwerte (25) mit den aus dem Speicher für das ausgewählte Manöver
abgerufenen Sensorwerten übereinstimmen.

## Revendications

1. Procédé pour supporter des manoeuvres d'un transporteur toute voilure par ses unités volantes parasites, **caractérisé en ce qu'**il comprend les étapes de :
- fourniture d'une mémoire avec des valeurs de capteur prédéfinies (25) correspondant à des manoeuvres ;
- sélection (20) d'une manoeuvre à exécuter ;
- détermination (21) de valeurs de capteur (25) correspondant à la manoeuvre sélectionnée, par extraction de la mémoire des valeurs de capteur (25) ;
- sélection (22) de moteurs de parasites pour supporter la manoeuvre ;
- activation (23) desdits moteurs dans une boucle d'asservissement de sorte que les valeurs de capteur mesurées (25) soient mises en correspondance avec les valeurs de capteur extraites de la mémoire pour la manoeuvre sélectionnée.

2. Procédé selon la revendication 1, lesdites valeurs de capteur (25) étant des valeurs de contrainte.

3. Procédé selon l'une quelconque des revendications précédentes, ladite activation (23) des moteurs comprenant en outre le réglage de la position angulaire du parasite par rapport au transporteur.

4. Procédé selon l'une quelconque des revendications précédentes, ladite activation (23) des moteurs comprenant en outre le réglage de la poussée desdits moteurs.

5. Système pour supporter des manoeuvres d'un transporteur toute voilure par ses unités volantes parasites, le système comprenant :
- une mémoire avec des valeurs de capteur prédéfinies (25) correspondant à des manoeuvres ;
- un contrôleur (31) conçu pour :
- sélectionner (20) une manoeuvre à exécuter ;
- déterminer (21) des valeurs de capteur (25) correspondant à la manoeuvre sélectionnée par extraction de la mémoire des valeurs de capteur (25) ;
- sélectionner (22) des moteurs de parasites pour supporter la manoeuvre ;
- activer (23) lesdits moteurs dans une boucle d'asservissement de sorte que les valeurs de capteur mesurées (25) soient mises en correspondance avec les valeurs de capteur extraites de la mémoire pour la manoeuvre sélectionnée.
